(19) Europäisches Patentamt / European Patent Office / Office européen des brevets

(11) **EP 3 001 276 B1**

(12) **FASCICULE DE BREVET EUROPEEN**

(45) Date de publication et mention de la délivrance du brevet:
**13.05.2020 Bulletin 2020/20**

(51) Int Cl.:
**G05F 1/67** (2006.01)

(21) Numéro de dépôt: **15186687.8**

(22) Date de dépôt: **24.09.2015**

(54) **PROCEDE ET DISPOSITIF DE POURSUITE D'UN POINT DE PUISSANCE MAXIMALE D'UN MODULE PHOTOVOLTAÏQUE**

VERFAHREN UND VORRICHTUNG ZUR VERFOLGUNG DER MAXIMALEN LEISTUNG EINES FOTOVOLTAIK-MODULS

METHOD AND DEVICE FOR TRACKING A MAXIMUM POWER POINT OF A PHOTOVOLTAIC MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2014 FR 1459044**

(43) Date de publication de la demande:
**30.03.2016 Bulletin 2016/13**

(73) Titulaire: **COMMISSARIAT À L'ÉNERGIE ATOMIQUE ET AUX ÉNERGIES ALTERNATIVES**
**75015 Paris (FR)**

(72) Inventeur: **ZARA, Henri**
**73370 LE BOURGET DU LAC (FR)**

(74) Mandataire: **Novaimo**
**Europa 1**
**362, avenue Marie Curie**
**Archamps Technopole**
**74166 Saint Julien-en-Genevois Cedex (FR)**

(56) Documents cités:
- Carlos E.B. Rambos, Fernando B. dos Resi, Guilherme R. Pedrollo: "Melhoria de Desempenho do MPPT P&O Utilizando a Derivada da Tensão dos Painéis Fotovoltaicos para Variação da Perturbação", XXI International Conference on Electronics, Electrical and Computing INTERCON 2014 , 8 août 2014 (2014-08-08), XP002741035, Extrait de l'Internet: URL:http://ucsp.edu.pe/intercon2014/wp-con tent/uploads/2014/01/Cronograma-presentaci ones-orales-y-posters.pdf [extrait le 2015-06-16] & Carlos E.B. Rambos, Fernando B. dos Resi, Guilherme R. Pedrollo: "Improving Performance of the P&O MPPT Using Derivative of Photovoltaic Panel Voltage", Industrial Electronics Society, IECON 2014 - 40th Annual Conference of the IEEE , 29 octobre 2014 (2014-10-29), Extrait de l'Internet: URL:http://ieeexplore.ieee.org/stamp/stamp .jsp ?tp=&arnumber=7049348 [extrait le 2015-06-16]
- GUY WALTISPERGER ET AL: "Photovoltaic energy harvester for micro-scale applications", NEWCAS CONFERENCE (NEWCAS), 2010 8TH IEEE INTERNATIONAL, IEEE, PISCATAWAY, NJ, USA, 20 juin 2010 (2010-06-20), pages 177-180, XP031776905, ISBN: 978-1-4244-6806-5
- ESRAM T ET AL: "Comparison of Photovoltaic Array Maximum Power Point Tracking Techniques", IEEE TRANSACTIONS ON ENERGY CONVERSION, IEEE SERVICE CENTER, PISCATAWAY, NJ, US, vol. 22, no. 2, 1 June 2007 (2007-06-01), pages 439-449, XP011184738, ISSN: 0885-8969, DOI: 10.1109/TEC.2006.874230

- SAVENKOV ET AL: "A SIMPLE MAXIMUM POWER POINT TRACKER UTILIZINH THE RIPPLE CORRELATION CONTROL TECHNIQUE", ISES-AP- THIRD INTERNATIONAL SOLAR ENERGY SOCIETY CONFERENCE, 25 November 2008 (2008-11-25), - 28 November 2008 (2008-11-28), pages 1-8, Sydney

- LIM ET AL: "SIMPLE MAXIMUM POWER TRACKER FOR PHOTOVOLTAIC ARRAYS", ELECTONIC LETTERS, vol. 36, no. 11, 25 May 2000 (2000-05-25),

**Description**

L'invention concerne un procédé de poursuite du point de puissance maximale et un dispositif associé.

En fonctionnement, un module photovoltaïque convertit de l'énergie solaire en énergie électrique. L'efficacité de la conversion dépend de plusieurs facteurs. Afin d'extraire le maximum d'énergie possible du module photovoltaïque, un dispositif MPPT (de l'anglais « Maximum Power Point Tracking »), est généralement associé au module photovoltaïque.

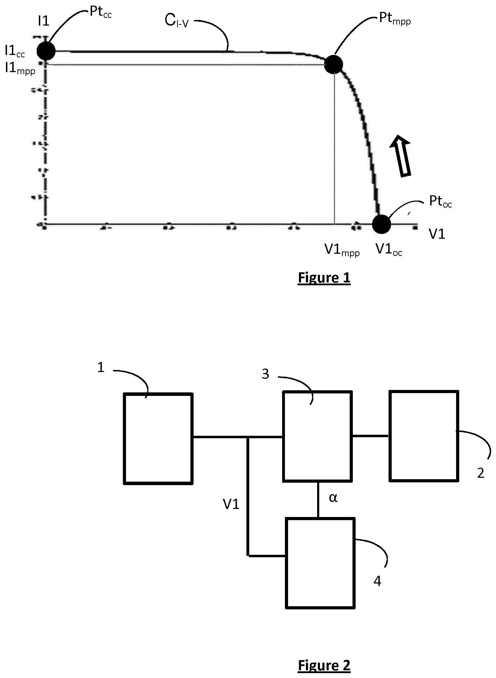

Un module photovoltaïque dispose de sa propre caractéristique courant-tension (I-V), dont un exemple typique est représenté sur la figure 1. Cette caractéristique courant-tension comprenant un ensemble de points de fonctionnement du module photovoltaïque. Ces points de fonctionnement forment une courbe qui relie un point de fonctionnement en court-circuit, pour lequel la tension est nulle et le courant est égal au courant de court-circuit Icc, et un point de fonctionnement en circuit ouvert, pour lequel le courant est nul et la tension est égale à la tension en circuit ouvert Voc. La puissance électrique délivrée par le module photovoltaïque est le produit de la tension V à ses bornes par le courant I qu'elle génère. Elle est maximale en un point de la courbe défini par un courant donné Impp et une tension donnée Vmpp. Ce point de puissance maximale est situé dans la zone d'inflexion de la courbe courant-tension.

Un dispositif MPPT est destiné à positionner le point de fonctionnement du module photovoltaïque au plus près du point de puissance maximale Pmpp, le but étant d'extraire le maximum de puissance possible du module photovoltaïque.

De nombreux dispositifs MPPT fonctionnent selon une méthode de « Perturbation et Observation », ou P&O (de l'anglais « Perturb and Observ »). Il s'agit d'un algorithme qui recherche la valeur optimale de puissance en faisant varier la valeur de tension V du module photovoltaïque et en analysant la puissance délivrée P (ou l'intensité I), de manière à la maximiser. Un circuit analogique approche le point de puissance maximale par actions successives. Ces dispositifs nécessitent un grand nombre de mesures électriques de tension et de courant (ou de puissance).

On identifie ici le document "Comparison of Photovoltaic Array Maximum Power Point Tracking Techniques", Esram Tristan et al, IEEE TRANSACTIONS ON ENERGY CONVERSION, IEEE SERVICE CENTER, PISCATAWAY, NJ, US, vol. 22, no. 2, 1 juin 2007 (2007-06-01), pages 439-449, XP011184738, ISSN : 0885-8969, DOI:10.1109/TEC.2006.874230

La présente invention vise à améliorer la situation.

A cet effet, l'invention concerne un procédé de poursuite d'un point de puissance maximale d'un module photovoltaïque, caractérisé en ce qu'il comprend une étape de dérivation par rapport au temps d'une grandeur électrique délivrée par le module photovoltaïque et une étape de régulation d'un paramètre de réglage du point de fonctionnement du module photovoltaïque lors de laquelle la dérivée de ladite grandeur électrique est asservie à un seuil de référence prédéfini correspondant à un point de fonctionnement égal ou proche du point de puissance maximale du module photovoltaïque.

Par « proche du point de puissance maximale », on entend désigner un point de fonctionnement dont la puissance présente un écart de puissance relatif de + ou - 5%, notamment de + ou -1%, par rapport à la puissance maximale.

L'invention consiste à réguler le point de fonctionnement du module photovoltaïque autour de son point de puissance maximale, ou autour d'un point de fonctionnement proche du point de puissance maximale, par un asservissement de la dérivée dans le temps d'une grandeur électrique délivrée par le module photovoltaïque par rapport à un seuil de référence préalablement défini. Cette grandeur peut être la tension aux bornes du module photovoltaïque ou le courant délivré par le module photovoltaïque.

Ainsi l'invention nécessite peu de mesures, notamment pas de chaîne de mesure de tension et de courant, et constitue donc une solution à faible coût.

Avantageusement, lors de l'étape de régulation, on déplace le point de fonctionnement du module photovoltaïque le long d'une courbe courant-tension caractéristique dudit module photovoltaïque, en faisant varier le paramètre de réglage.

Un module photovoltaïque possède une caractéristique courant-tension représentée par une courbe I-V, telle que celle représentée en figure 1, formée par les points de fonctionnement du module, chaque point étant défini par un courant I et une tension V. Lorsque le point de fonctionnement du module parcourt cette courbe à vitesse constante, la tension, ou le courant, varie brutalement lors du passage de la zone d'inflexion de la courbe, qui contient le point de puissance maximale. Selon l'invention, la variation (ou dérivée) de la tension, ou du courant, est utilisée pour détecter ce point de puissance maximale.

Dans un mode de réalisation particulier, lors d'une étape initiale, on attribue au paramètre de réglage une valeur initiale adaptée pour que le déplacement du point de fonctionnement du module photovoltaïque le long de la courbe courant-tension parte d'un point de fonctionnement en circuit ouvert ou d'un point de fonctionnement en court-circuit du module photovoltaïque.

Avantageusement, lors du déplacement du point de fonctionnement le long de la courbe courant-tension, on compare la dérivée de la grandeur physique au seuil de référence, on génère un signal en créneaux à deux états dépendant du résultat de la comparaison. Dans ce cas, et avantageusement encore, on calcule l'intégrale du signal en créneaux et on commande une variation du paramètre de réglage à partir de l'intégrale du signal.

Selon l'invention, la régulation est réalisée par un module de dérivation, ou dérivateur, un comparateur et un intégrateur. Elle utilise donc essentiellement des éléments de l'électronique analogique. Elle ne nécessite pas de développement d'algorithme, ni de processeur. Cela contribue au faible coût de la solution.

La grandeur électrique peut être la tension aux bornes du module photovoltaïque, ou le courant délivré par le module photovoltaïque.

Le procédé peut comprendre une étape préalable d'étalonnage lors de laquelle le seuil de référence est déterminé pour le module photovoltaïque.

L'invention concerne aussi un dispositif de poursuite d'un point de puissance maximale d'un module photovoltaïque, caractérisé en ce qu'il comprend un module de dérivation par rapport au temps d'une grandeur électrique délivrée par le module photovoltaïque et un module de régulation d'un paramètre de réglage du point de fonctionnement du module photovoltaïque, ledit module de régulation étant agencé pour asservir une dérivée de ladite grandeur électrique à un seuil de référence prédéfini correspondant à un point de fonctionnement égal ou proche du point de puissance maximale.

Le dispositif peut comprendre tout ou partie des caractéristiques additionnelles suivantes :

- le module de régulation est agencé pour commander des variations du paramètre de réglage induisant un déplacement le point de fonctionnement du module photovoltaïque à vitesse constante le long d'une courbe courant-tension caractéristique dudit module photovoltaïque ;
- il comprend un module de commande agencé pour attribuer au paramètre de réglage une valeur initiale adaptée pour que le déplacement du point de fonctionnement du module photovoltaïque le long de la courbe courant-tension parte d'un point de fonctionnement en circuit ouvert ou d'un point de fonctionnement en court-circuit du module photovoltaïque ;
- le module de régulation comprend un comparateur relié en entrée au module de dérivation et à un circuit analogique générant une tension de référence dont la valeur correspondant à la valeur du seuil de référence, et destiné à délivrer en sortie un signal en créneaux à deux états selon le résultat de la comparaison;
- le module de régulation comprend un intégrateur relié en entrée à la sortie du comparateur et destiné à calculer l'intégrale du signal en créneaux de sortie du comparateur et en ce que le module de commande est agencé pour commander soit une augmentation soit une diminution du paramètre de réglage à partir de l'intégrale calculée.

L'invention concerne encore un système comprenant un convertisseur pour module photovoltaïque et le dispositif de poursuite d'un point de puissance maximale d'un module photovoltaïque tel que précédemment défini, le convertisseur étant destiné à être interposé entre le module photovoltaïque et une charge et disposant d'un rapport cyclique qui constitue ledit paramètre de réglage de la grandeur électrique du module photovoltaïque.

Dans une forme de réalisation particulière, le convertisseur de tension est un convertisseur élévateur de tension, notamment un convertisseur DC/DC Boost.

L'invention sera mieux comprise à l'aide de la description suivante d'une forme de réalisation particulière du dispositif de poursuite d'un point de puissance maximale d'un module photovoltaïque, en référence aux dessins annexés sur lesquels :

- La figure 1 représente une caractéristique I-V courant-tension d'un module photovoltaïque, selon un exemple particulier de réalisation ;
- La figure 2 représente un schéma bloc fonctionnel comportant un module photovoltaïque, un convertisseur, une charge et un dispositif MPPT de poursuite d'un point de puissance maximale selon une forme de réalisation particulière de l'invention ;
- La figure 3 représente un schéma bloc fonctionnel du dispositif MPPT de la figure 2 selon un exemple particulier de réalisation ;
- La figure 4 représente l'évolution de la variation de la tension aux bornes du module photovoltaïque lorsque le point de fonctionnement du module parcourt la caractéristique I-V de la figure 1 ;
- La figure 5 représente un schéma du convertisseur de la figure 2, selon un exemple de réalisation particulier ;
- La figure 6 représente une schéma électrique détaillé d'un dispositif MPPT de simulation selon un exemple particulier de réalisation de l'invention ;
- Les figures 7A à 7D représentent des résultats de simulation d'un dispositif MPPT selon la figure 6, la simulation étant effectuée pour une puissance nominale du module photovoltaïque correspondant à un ensoleillement prédéfini.

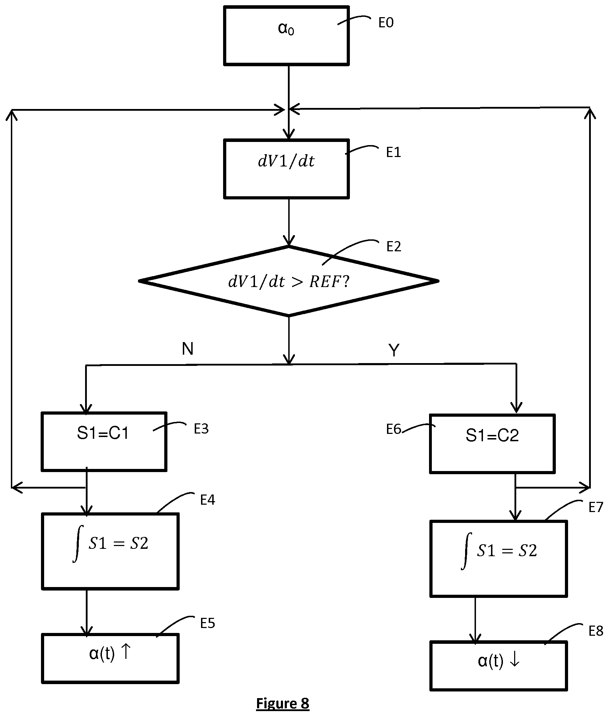

- La figure 8 représente un organigramme des étapes de procédé de fonctionnement de l'ensemble des éléments de la figure 2, lors de l'alimentation de la charge par le module photovoltaïque.

L'invention concerne un procédé de poursuite d'un point de puissance maximale d'un module photovoltaïque 1 et un dispositif 4 destiné à la mise en œuvre de ce procédé, appelé dispositif MPPT (de l'anglais « Maximum Power Point Tracking »).

Par « module photovoltaïque », on entend désigner un dispositif comprenant une ou plusieurs cellules photovoltaïques reliées entre elles électriquement. Le module photovoltaïque 1 est destiné à convertir de l'énergie solaire en énergie électrique. Il dispose d'une caractéristique courant-tension (I-V) telle que celle représentée à titre d'exemple sur la figure 1. Cette caractéristique courant-tension est une courbe, notée $C_{I-V}$, dite « courbe I-V » ou « courbe courant-tension », formée par un ensemble de points de fonctionnement du module photovoltaïque 1. Chaque point de fonctionnement est défini par un couple (I1, V1) de courant I1 généré par le module photovoltaïque 1 et de tension V1 aux bornes du module photovoltaïque 1. Ces points comprennent trois points particuliers :

- le point $Pt_{cc}$ de fonctionnement en court-circuit pour lequel la tension V1 est nulle et le courant I1 est égal à I1cc (courant de court-circuit) du module 1 ;
- le point $Pt_{oc}$ de fonctionnement en circuit ouvert pour lequel la tension V1 est égale à V1oc (tension en circuit ouvert) et le courant I1 est nul ;
- le point $Pt_{mpp}$ (de l'anglais « maximum power point ») de puissance maximale, pour lequel la tension vaut V1 mpp et le courant vaut I1 mpp, la puissance électrique délivrée par le module photovoltaïque 1, égale au produit V1mppxI1mpp, étant maximale.

Le dispositif MPPT 4 est destiné à extraire la puissance maximale possible du module photovoltaïque 1, autrement dit à positionner le point de fonctionnement du module 1 au plus proche du point $Pt_{mpp}$.

Sur la figue 2, on a représenté le module photovoltaïque 1 et une charge 2. Le module photovoltaïque 1 est destiné à alimenter électriquement la charge 2. Celle-ci est reliée au module photovoltaïque 1 par l'intermédiaire d'un convertisseur 3 associé au dispositif MPPT 4.

Dans l'exemple particulier décrit ici, la charge 2 est une batterie ayant une tension V2 à ses bornes. La tension V2 est fixe. Le module photovoltaïque 1 est destiné à lui fournir un courant I2 régulé.

Le convertisseur 3 est par exemple un convertisseur de tension DC/DC Boost. Il est destiné à élever la tension entre la sortie du module photovoltaïque 1 et l'entrée de la charge 2. En fonctionnement, il convertit la tension continue V1 délivrée par le module photovoltaïque 1 en une autre tension continue V2 de plus forte valeur alimentant la charge 2. Il dispose d'un paramètre $\alpha$ de réglage de la tension aux bornes du module photovoltaïque 1. Les tensions V1 et V2 sont liées entre elles par une fonction f du paramètre $\alpha$, selon la relation $V1 = f(\alpha) \times V2$. Ce paramètre $\alpha$ est ici un rapport cyclique du convertisseur 3 qui définit la relation suivante entre la tension V1 aux bornes du module photovoltaïque 1 et la tension V2 aux bornes de la charge 2 :

$$V1 = (1 - \alpha).V2$$

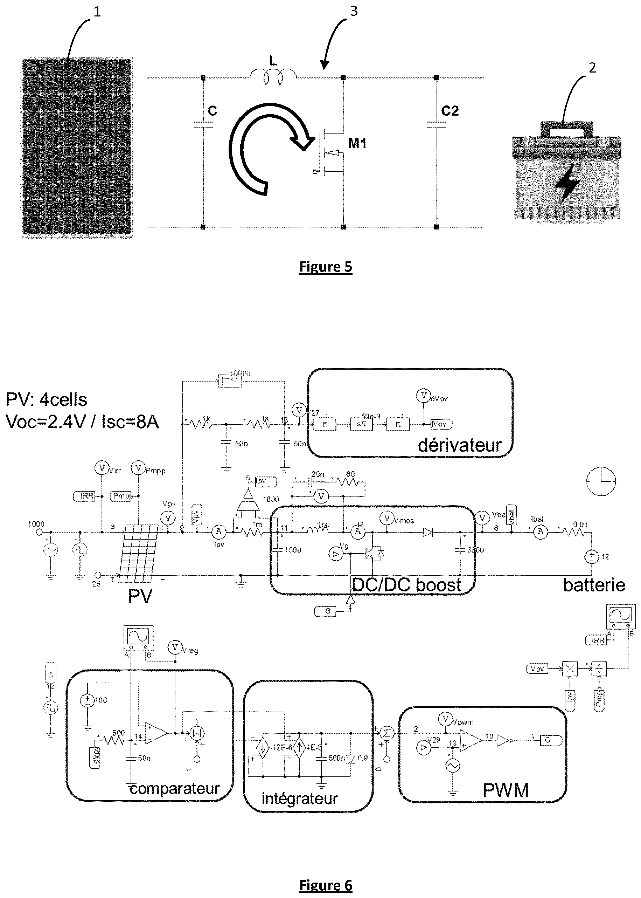

Un exemple de réalisation du convertisseur 3 est représenté sur la figure 5. Il comprend un circuit « LC » comportant une inductance L et un condensateur C en série. Un interrupteur M1 est en outre intégré au circuit LC. L'ensemble comportant l'inductance L, la capacité C et l'interrupteur M1, montés en série, forme une boucle de régulation qui possède une pulsation propre $w_0$ définie par la relation suivante :

$$w_0 = \frac{1}{2\pi\sqrt{LC}}$$

Le module photovoltaïque 1 est relié aux bornes du condensateur C. La charge 2 est reliée aux bornes de l'interrupteur M1 par l'intermédiaire d'un condensateur C2, monté en parallèle.

En fonctionnement, un signal de commande généré par un module de commande 42 (non représenté sur la figure 5) ouvre et ferme l'interrupteur M1 à une fréquence d'excitation, ici supérieure à la fréquence propre $w_0$, et avec un rapport cyclique $\alpha$. Le rapport cyclique $\alpha$ définit les durées respectives d'ouverture et de fermeture de l'interrupteur M1 lors de chaque cycle. Il peut varier dans le temps. On note $\alpha(t)$ la valeur du paramètre $\alpha$ de réglage de la tension V1 à un instant t.

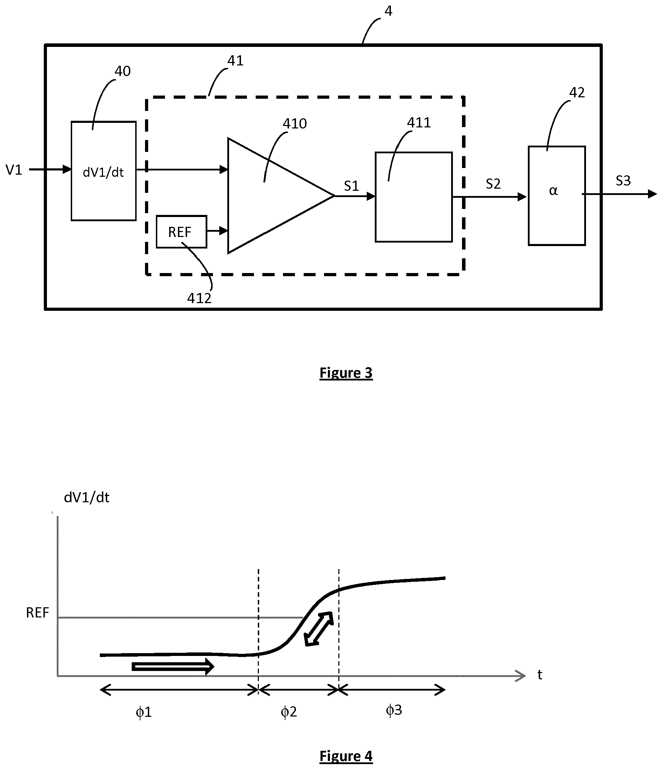

En référence à la figure 3, le dispositif MPPT 4 comprend :

- un module 40 de dérivation de la tension aux bornes du module photovoltaïque 1 ;
- un module 41 de régulation du paramètre $\alpha$ de réglage de la tension V1 aux bornes du module photovoltaïque 1; et
- un module de commande 42, destiné à générer un signal de commande du convertisseur 3.

Le module de dérivation 40, ou dérivateur, est relié aux bornes du module photovoltaïque 1. Le dérivateur 40 est destiné à mesurer la tension V1, à dériver dans le temps la tension V1 mesurée et à calculer ainsi la dérivée dans le temps (c'est-à-dire la variation temporelle instantanée) de la tension V1 du module photovoltaïque 1, notée $dV1/dt$.

Le module de régulation 41 est destiné à commander des variations dans le temps du paramètre $\alpha(t)$ et à le réguler à une valeur cible de référence $\alpha_{ref}$. En fonctionnement, une variation du paramètre $\alpha(t)$ induit une variation de la tension V1 du module photovoltaïque 1 et donc une variation de la puissance délivrée par le module photovoltaïque 1. La valeur $\alpha_{ref}$ correspond à un point de fonctionnement du module photovoltaïque 1 égal ou proche du point $Pt_{mpp}$ de puissance maximale. La régulation du paramètre a vise à extraire une puissance optimale du module photovoltaïque 1. Le but est d'alimenter la charge 4 avec une puissance électrique optimale. Autrement dit, la régulation du paramètre a a pour objectif de positionner le point de fonctionnement du module photovoltaïque 1, de façon stable, au point de puissance maximale $Pt_{mpp}$ ou à proximité de celui-ci. Le positionnement au point de puissance maximale s'accompagne ici d'un régime stable d'oscillation, comme cela sera explicité plus loin.

La régulation du paramètre a est réalisée par un asservissement autour d'un point de stabilité constitué par la valeur de référence $\alpha_{ref}$. L'asservissement du paramètre $\alpha$ est induit par un asservissement de la variation de tension $dv1/dt$ du module photovoltaïque 1 autour d'un seuil de référence REF, comme cela sera expliqué en détails par la suite.

Le module de commande 42, relié en entrée au module de régulation 41 et en sortie au convertisseur 3, est destiné à générer un signal S3(t) de commande de l'interrupteur M1 du convertisseur 3. Ce signal de commande S3(t) est généré à partir d'un signal de régulation S2(t) fourni par le module de régulation 41 et définit la valeur de $\alpha$. Le module de commande 42 est agencé pour attribuer à $\alpha$ une valeur initiale $\alpha_0$ au démarrage. Cette valeur $\alpha_0$ est telle que la tension V1 est supérieure ou égale à la tension Voc.

Le module de régulation 41 est agencé pour commander le déplacement du point de fonctionnement du module photovoltaïque 1, à vitesse constante ou quasi-constante, le long de la courbe $C_{I-V}$. De façon plus précise, le module de régulation 41 est agencé pour

- faire augmenter le paramètre $\alpha(t)$ depuis la valeur initiale $\alpha_0$ de manière à déplacer le point de fonctionnement du module photovoltaïque 1 le long de la courbe I-V, à vitesse constante ou quasi-constante, depuis le point $Pt_{oc}$ en direction du point $Pt_{cc}$ ;
- détecter un premier franchissement du seuil de référence REF par la variation de tension $dV1/dt$, et, sur détection du franchissement de seuil, faire diminuer le paramètre $\alpha(t)$, et
- après ce premier franchissement de seuil REF, commander, de façon alternée, soit une augmentation, soit une diminution du paramètre $\alpha(t)$ suite à chaque nouveau franchissement du seuil REF par la variation de tension $dv1/dt$, et obtenir un régime stable d'oscillation de la variation $dV1/dt$ autour du seuil REF.

Dans l'exemple de réalisation particulier décrit ici, le module de régulation 41 comprend un comparateur 410 et un intégrateur 411.

Le comparateur 410 comprend deux entrées et une sortie. Les deux entrées sont reliées respectivement au dérivateur 40 et à un circuit analogique 412, par exemple un potentiomètre, apte à délivrer une tension de référence dont la valeur correspond à la valeur du seuil de référence REF. Cette tension de référence est réglable. La sortie du comparateur 410 est reliée à une entrée de l'intégrateur 411. Le comparateur 410 est destiné à comparer la variation de tension $dV1/dt$ fournie par le module de dérivation 40 au seuil de référence REF et à générer en sortie un signal en créneaux, à deux états (respectivement haut et bas) dépendant du signal de sortie du comparateur S1(t) (c'est-à-dire du résultat de la comparaison entre $dv1/dt$ et REF). L'état « haut » correspond au cas où la variation de tension $dV1/dt$ est inférieure ou égale au seuil de référence REF. Le état « bas » correspond au cas où la variation de tension $dv1/dt$ est supérieure au seuil de référence REF.

L'intégrateur 411 est adapté pour calculer l'intégrale du signal en créneaux de sortie S1(t) du comparateur 410 et pour transmettre le signal S2(t) de régulation (correspondant à l'intégrale du signal S1(t)) au module de commande 42. La variation du paramètre $\alpha(t)$ est ainsi destinée à être contrôlée par l'intégrale du signal S1(t) de sortie du comparateur 410. Plus précisément, dans l'exemple de réalisation décrit ici, la valeur du paramètre $\alpha(t)$ est destinée à être augmentée lorsque le signal de sortie S1(t) est dans l'état haut et diminuée lorsque ce signal de sortie S1(t) est dans l'état bas, par le biais de l'intégrale S2(t).

L'intégrateur 411 et le dérivateur 40 possèdent des constantes de temps égales ou proches.

Le seuil de référence REF, ajusté dans le dispositif MPPT 4, est prédéterminé lors d'une phase d'étalonnage du dispositif MPPT 4. La figure 4 représente l'évolution de la variation instantanée de tension $dV1/dt$ lorsque l'on déplace le point de fonctionnement du module photovoltaïque 1 le long de la courbe caractéristique I-V de la figure 1, à vitesse constante, depuis le point de fonctionnement en circuit ouvert $Pt_{oc}$, jusqu'au point de fonctionnement en court circuit $Pt_{cc}$. Au début, durant une première phase $\phi1$, la variation de tension $dV1/dt$ est faible et quasi-constante. Cette première phase $\phi1$ correspond au parcours de la portion de courbe sensiblement inclinée par rapport à la verticale de la courbe I-V en partant de $Pt_{oc}$. Puis, lors d'une deuxième phase $\phi2$, la variation de tension $dV1/dt$ augmente brutalement. Cette deuxième phase $\phi2$ correspond au parcours de la portion d'inflexion, courbée, de la courbe I-V. Enfin, lors d'une troisième phase $\phi3$, la variation de tension $dV1/dt$ redevient quasi-constante et égale à une valeur plus élevée que la valeur initiale. Cette troisième phase $\phi3$ correspond au parcours de la portion horizontale ou quasi-horizontale de la courbe I-V, pour laquelle le courant I1 est égal ou proche du courant de court-circuit $I_{cc}$. Cette courbe d'évolution de la variation de tension $dV1/dt$ en fonction du temps t présente donc deux portions en plateau ($\phi1$ et $\phi3$) reliées par une portion intermédiaire ($\phi2$) en forme de marche. Le seuil de référence REF est situé au niveau de la marche, entre les deux portions en plateau. Par exemple, le seuil de référence est situé au milieu de la marche ou à proximité du milieu à + ou - 20%.

La valeur de ce seuil de référence REF dépend de la caractéristique courant-tension du module photovoltaïque 1, notamment de la forme de la courbe I-V. Elle est calculée lors d'une phase d'étalonnage préalable à l'utilisation du module photovoltaïque 1. La détermination du seuil REF peut être réalisée soit spécifiquement pour le module photovoltaïque 1, soit pour un ensemble de modules photovoltaïque ayant la même caractéristique courant-tension, notamment des modules photovoltaïque fabriqués selon la même technologie (par exemple silicium cristallin, amorphe, couches minces, organiques, ...). Diverses méthodes de détermination du seuil REF peuvent être utilisées. Par exemple, connaissant la caractéristique courant-tension du module photovoltaïque 1 et le point de puissance maximale $Pt_{mpp}$, on peut mesurer la variation de tension $dv1/dt$ expérimentalement, à l'aide d'un potentiomètre et d'un dérivateur, tout en faisant varier la tension V1 de manière à déplacer le point de fonctionnement du module photovoltaïque 1 sur la courbe I-V à vitesse constante en passant par le point $Pt_{mpp}$. On pourrait également tracer la courbe de la figure 4 à l'aide d'un potentiomètre et d'un dérivateur, en déplaçant le point de fonctionnement du module photovoltaïque 1 entre les points $Pt_{oc}$ et $Pt_{cc}$ de manière à parcourir la courbe I-V à vitesse constante, puis attribuer au seuil de référence REF une valeur de la marche ($\phi2$), par exemple le milieu ou sensiblement le milieu de la marche.

Le convertisseur 3 et le dispositif MPPT 4 forment un système. Il peuvent être intégrés dans un même équipement.

On va maintenant décrire le procédé de poursuite du point de puissance maximale selon un mode de réalisation particulier de l'invention. Ce procédé correspond au fonctionnement de l'ensemble comprenant le module photovoltaïque 1, le convertisseur 3 associé au dispositif MPPT 4 et la charge 2, lors d'une alimentation (ici en courant) de la charge 2 par le module photovoltaïque 1.

Dans l'exemple particulier de réalisation décrit ici, rappelons que :

- la charge 2 est une batterie ayant une tension V2 à ses bornes qui est fixe ;
- les tensions V2 (charge) et V1(module photovoltaïque) sont liées, à un instant t, par la relation suivante : $V1(t) = (1 - \alpha(t))$. $V2$.

Le procédé de poursuite du point de puissance maximale de l'invention repose sur une régulation du paramètre $\alpha$ de réglage du point de fonctionnement du module photovoltaïque 1 par un asservissement de la variation de tension $dV1/dt$ au seuil de référence REF qui correspond à un point de fonctionnement égal ou proche du point de puissance maximale du module photovoltaïque 1.

Durant le fonctionnement, le module photovoltaïque 1 est soumis à un ensoleillement (par exemple 1000 W/m$^2$) ici de puissance nominale. Il est connecté à la charge 2, par l'intermédiaire du convertisseur 3, afin de l'alimenter électriquement.

Initialement, lors d'une étape E0, le module de commande 42 du dispositif MPPT 4 attribue au paramètre a la valeur initiale $\alpha_0$ telle que la tension V1 aux bornes du module photovoltaïque 1 soit supérieure (ici légèrement supérieure) à la tension Voc en circuit ouvert. Tant que la tension V1 est fixe, supérieure ou égale à Voc, la variation $dV1/dt$ est nulle.

Lors d'une étape E1, le dérivateur 40 détermine, de façon continue, la dérivée de la tension V, soit $dV1/dt$.

Lors d'une étape de test E2, le comparateur 410 compare la variation $dv1/dt$ de la tension V1 du module photovoltaïque 1 au seuil de référence REF, afin de vérifier si $dv1/dt$ est strictement supérieur à REF.

Dans un premier temps, tant que la tension V1 est fixe et supérieure ou égale à Voc, la variation $dV1/dt$ est nulle et donc inférieure au seuil REF. Le procédé se poursuit alors par une étape E3 (étape E2 négative, branche « N » sur l'organigramme).

Lors de cette étape E3, le comparateur 410 génère en sortie le signal S1 à l'état haut, valant une constante C1. Par exemple, C1 vaut 1. Le signal S1 (la constante C1) est intégré en temps réel lors d'une étape E4. A partir de l'intégrale calculée S2(t), le module de commande 42 augmente la valeur de $\alpha(t)$ de son signal de commande, lors d'une étape E5.

Les étapes E1, E2 et E3, associée à E4 et E5, sont réitérées en boucle, de façon continue, tant que $dV1/dt \le REF$. Cela conduit à une augmentation en temps réel, de façon continue, du paramètre $\alpha$. Cette augmentation de $\alpha$ induit une diminution de la tension V1 qui atteint la tension Voc à un instant T1 puis continue de diminuer tandis que le point de fonctionnement du module photovoltaïque 1 se déplace sur la courbe I-V depuis le point $Pt_{oc}$ en direction du point $Pt_{cc}$ à vitesse constante ou quasi-constante.

A un instant suivant T2, on détecte lors de l'étape E2 que $dV1/dt$ a légèrement dépassé le seuil REF (étape E2 positive, branche « Y » sur l'organigramme). Le procédé se poursuit alors par une étape E6.

Lors de l'étape E6, le comparateur 410 génère un signal de sortie S1 à l'état bas valant une constante C2. Par exemple, C2 vaut -1. L'intégrateur 411 calcule l'intégrale S2 le signal de sortie S1 (C2), lors d'une étape E7. A partir de l'intégrale S2(t), le module de commande 42 déclenche une diminution du paramètre a de son signal de commande lors d'une étape E8.

Les étapes E1, E2 et E6, associées E7 et E8, sont réitérées en boucle, de façon continue, tant que $dV1/dt$ est supérieur à REF. Cela conduit à une diminution en temps réel du paramètre $\alpha$. Il en résulte que le point de fonctionnement du module photovoltaïque 1 se déplace le long de la courbe I-V en sens inverse, en direction de $Pt_{oc}$. Le paramètre $\alpha(t)$ diminuant, $dV1/dt$ franchit de nouveau le seuil de référence REF et passe au-dessous de celui-ci.

Sur détection du nouveau franchissement du seuil REF (étape E2), le procédé passe de nouveau à l'étape E3, associée aux étapes E4 et E5, qui ont pour résultat d'augmenter le paramètre $\alpha(t)$.

Ainsi, à chaque franchissement du seuil REF par la variation $dV1/dt$ de la tension V1, le dispositif MPPT 4 commande, de façon alternée, soit une diminution, soit une augmentation du paramètre de réglage $\alpha(t)$.

Cette commande est ici réalisée de façon analogique par le comparateur 410 et l'intégrateur 411. Ces deux derniers coopèrent pour détecter les franchissements du seuil REF par $dV1/dt$ et, à chaque franchissement de seuil, soit diminuer $\alpha(t)$ (si le seuil a été dépassé), soit augmenter $\alpha(t)$ (si le seuil a été franchi à la baisse).

Par asservissement, la variation $dv1/dt$ se stabilise autour du seuil de référence REF en effectuant de faibles oscillations autour de celui-ci. Le seuil REF correspondant à un point de fonctionnement du module photovoltaïque égal ou proche du point de puissance maximale $Pt_{mpp}$, le point de fonctionnement du module photovoltaïque 1 se stabilise autour du point de fonctionnement de puissance maximale $Pt_{mppt}$, en réalisant de faibles oscillations autour de ce point.

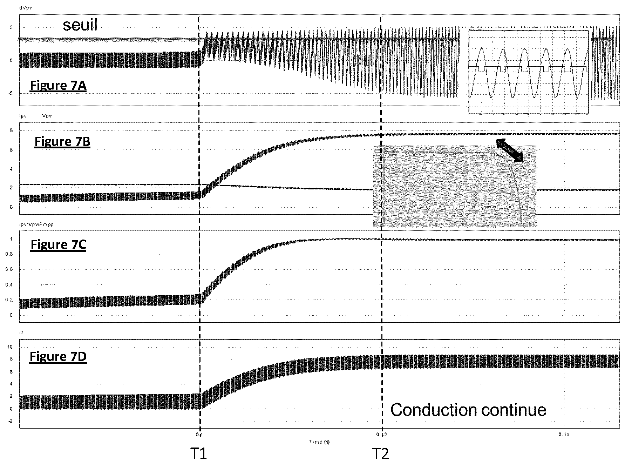

Sur les figures 7A à 7D, on a représenté des résultats de simulation du fonctionnement du module photovoltaïque 1 à une puissance nominale obtenue avec un ensoleillement prédéterminé (par exemple 1000W/m$^2$). Comme précédemment décrit, le module 1 alimente la charge 2 par l'intermédiaire du convertisseur 3 associé au dispositif MPPT 4. On a représenté :

- sur la figure 7A, l'évolution temporelle de la variation $dV1/dt$ et le seuil REF à compter d'un instant initial T=0 et jusqu'à stabilisation autour de REF ;
- sur la figure 7B, l'évolution temporelle de la tension V1 et du courant I1 délivrés par le module photovoltaïque 1 durant la même période ;
- sur la figure 7C, l'évolution temporelle du taux $I1 \times V1/I_{mpp} \times V_{mpp}$ durant la même période ;
- sur la figure 7D, l'évolution temporelle du courant $I_L$ dans l'inductance L du convertisseur 3 durant la même période.

Comme précédemment explicité, à l'instant initial T=0, le paramètre $\alpha(t)$ a une valeur $\alpha_0$ telle que la tension V1 du module photovoltaïque 1 est légèrement supérieure à Voc. A partir de l'instant T1 (ici T1=0,1s), par augmentation de la valeur de $\alpha$, le point de fonctionnement du module photovoltaïque 1 parcourt rapidement la courbe I-V.

En référence à la figure 7B, à partir de l'instant T1=0,1s, le courant I1 du module 1 augmente jusqu'à atteindre le courant $I1_{mpp}$ de puissance maximale et se stabilise autour de ce courant $I1_{mpp}$, globalement à compter d'un instant T2, par un régime d'oscillations stable. La variation du courant I1 est accompagnée d'un régime d'oscillation qui est lié à l'architecture de type LC du convertisseur 3. De façon similaire, en référence à la figure 7C, la puissance délivrée par le module photovoltaïque 1 augmente à partir de l'instant T1 et se stabilise autour de la puissance maximale Pmpp à partir de l'instant T2 par un régime d'oscillations stable.

Sur la figure 7A, on voit que ce régime d'oscillation a pour effet que la variation $dv1/dt$ atteint et dépasse légèrement REF, durant la période transitoire entre T1 et T2, avant stabilisation du point de fonctionnement du module photovoltaïque 1 autour du point de puissance maximale $Pt_{mpp}$. Durant cette période transitoire, le régime d'oscillation se poursuit en s'amplifiant jusqu'à atteindre le régime stable autour de la puissance maximale Pmpp.

Sur la figure 6, on a représenté à titre illustratif un exemple de schéma électronique de simulation.

Au lieu de dériver la tension, on pourrait dériver le courant délivré par le module photovoltaïque 1 et l'asservir à une valeur de référence prédéterminée.

Par ailleurs, au lieu de commencer à parcourir la courbe I-V depuis le point $Pt_{oc}$ en direction du point $Pt_{cc}$, on pourrait la parcourir en sens inverse depuis le point $Pt_{cc}$ en direction du point $Pt_{oc}$.

## Revendications

1. Procédé de poursuite d'un point de puissance maximale d'un module photovoltaïque (1), le procédé comprend une étape (E1) de dérivation par rapport au temps d'une grandeur électrique (V1) délivrée par le module photovoltaïque (1) le procédé est **caractérisé en ce qu'**il comprend également une étape (E2-E8) de régulation d'un paramètre ($\alpha$) de réglage du point de fonctionnement du module photovoltaïque lors de laquelle la dérivée ($dV1/dt$) de ladite grandeur électrique est asservie à un seuil de référence (REF) prédéfini correspondant à un point de fonctionnement égal ou proche du point de puissance maximale ($Pt_{mpp}$) du module photovoltaïque (1).

2. Procédé selon la revendication précédente, **caractérisé en ce que**, lors de l'étape de régulation (E2-E8), on déplace le point de fonctionnement du module photovoltaïque le long d'une courbe courant-tension caractéristique dudit module photovoltaïque, en faisant varier le paramètre de réglage ($\alpha$).

3. Procédé selon la revendication précédente, **caractérisé en ce que**, lors d'une étape initiale, on attribue au paramètre de réglage ($\alpha(t)$) une valeur initiale ($\alpha_0$) adaptée pour que le déplacement du point de fonctionnement du module PV (1) le long de la courbe courant-tension parte d'un point de fonctionnement en circuit ouvert ($Pt_{oc}$) ou d'un point de fonctionnement en court-circuit ($Pt_{cc}$) du module photovoltaïque (1).

4. Procédé selon l'une des revendications 2 et 3, **caractérisé en ce que**, lors du déplacement du point de fonctionnement le long de la courbe courant-tension, on compare la dérivée ($dV1/dt$) de la grandeur physique au seuil de référence (REF), on génère un signal (S1) en créneaux à deux états dépendant du résultat de la comparaison.

5. Procédé selon la revendication 4, **caractérisé en ce qu'**on calcule (E4, E7) l'intégrale (S2) du signal en créneaux et on commande une variation du paramètre de réglage ($\alpha$) à partir de l'intégrale du signal.

**6.** Procédé selon l'une des revendications précédentes, **caractérisé en ce que** la grandeur électrique est la tension (V1) aux bornes du module photovoltaïque (1) ou le courant (I1) délivré par le module photovoltaïque (1).

**7.** Procédé selon l'une des revendications précédentes, **caractérisé en ce qu'**il comprend une étape préalable d'étalonnage lors de laquelle le seuil de référence est déterminé pour le module photovoltaïque (1).

**8.** Dispositif de poursuite d'un point de puissance maximale d'un module photovoltaïque (1), le dispositif comprend un module (40) de dérivation par rapport au temps d'une grandeur électrique délivrée par le module photovoltaïque, le dispositif est **caractérisé en ce qu'**il comprend également un module (41) de régulation d'un paramètre (α) de réglage du point de fonctionnement du module photovoltaïque, ledit module de régulation (41) étant agencé pour asservir une dérivée de ladite grandeur électrique à un seuil de référence prédéfini (REF) correspondant à un point de fonctionnement égal ou proche du point de puissance maximale.

**9.** Dispositif selon la revendication précédente, **caractérisé en ce que** le module de régulation (41) est agencé pour commander des variations du paramètre de réglage induisant un déplacement le point de fonctionnement du module photovoltaïque (1) à vitesse constante le long d'une courbe courant-tension caractéristique dudit module photovoltaïque.

**10.** Dispositif selon la revendication précédente, **caractérisé en ce qu'**il comprend un module de commande (42) agencé pour attribuer au paramètre de réglage $\alpha(t)$ une valeur initiale ($\alpha_0$) adaptée pour que le déplacement du point de fonctionnement du module PV (1) le long de la courbe courant-tension parte d'un point de fonctionnement en circuit ouvert ($Pt_{oc}$) ou d'un point de fonctionnement en court-circuit ($Pt_{cc}$) du module photovoltaïque.

**11.** Dispositif selon l'une des revendications 8 à 10, **caractérisé en ce que** le module de régulation (41) comprend un comparateur (410) relié en entrée au module de dérivation (40) et à un circuit analogique (412) délivrant une tension de référence dont la valeur correspondant à la valeur du seuil de référence (REF), et destiné à délivrer en sortie un signal (S1) en créneaux à deux états selon le résultat de la comparaison.

**12.** Dispositif selon la revendication précédente, **caractérisé en ce que** le module de régulation (41) comprend un intégrateur (411) relié en entrée à la sortie du comparateur (410) et destiné à calculer l'intégrale (S2) du signal en créneaux (S1) de sortie du comparateur (410) et **en ce que** le module de commande (42) est agencé pour commander soit une augmentation soit une diminution du paramètre de réglage à partir de l'intégrale calculée (S2).

**13.** Dispositif selon l'une des revendications 8 à 12, **caractérisé en ce que** le module de dérivation (40) est apte à être connecté aux bornes du module photovoltaïque et à mesurer l'une des grandeurs du groupe comportant la tension aux bornes du module photovoltaïque (1) et le courant (I1) délivré par le module photovoltaïque (1).

**14.** Système comprenant un convertisseur (3) pour module photovoltaïque et le dispositif (4) de poursuite d'un point de puissance maximale d'un module photovoltaïque selon l'une des revendications 8 à 13, le convertisseur (3) étant destiné à être interposé entre le module photovoltaïque (1) et une charge (2) et disposant d'un rapport cyclique (α) qui constitue ledit paramètre de réglage de la grandeur électrique du module photovoltaïque (1).

**15.** Système selon la revendication précédente, **caractérisé en ce que** le convertisseur de tension (3) est un convertisseur élévateur de tension, notamment un convertisseur DC/DC Boost.

**Patentansprüche**

**1.** Verfahren zur Verfolgung eines Punktes maximaler Leistung eines Photovoltaikmoduls (1), wobei das Verfahren einen Schritt (E1) der Ableitung einer von dem Photovoltaikmodul (1) gelieferten elektrischen Größe (V1) nach der Zeit umfasst,
wobei das Verfahren **dadurch gekennzeichnet ist, dass** es außerdem einen Schritt (E2-E8) der Regelung eines Regelparameters (α) für den Betriebspunkt des Photovoltaikmoduls umfasst, in welchem die Ableitung (*dV1/dt*) der elektrischen Größe auf einen vordefinierten Referenzschwellenwert (REF) geregelt wird, der einem Betriebspunkt entspricht, der gleich oder nahe dem Punkt maximaler Leistung ($Pt_{mpp}$) des Photovoltaikmoduls (1) ist.

**2.** Verfahren nach dem vorhergehenden Anspruch, **dadurch gekennzeichnet, dass** im Schritt der Regelung (E2-E8) der Betriebspunkt des Photovoltaikmoduls entlang einer charakteristischen Strom-Spannungs-Kurve des Photovoltaikmoduls verschoben wird, indem ein Variieren des Regelparameters (α) bewirkt wird.

**3.** Verfahren nach dem vorhergehenden Anspruch, **dadurch gekennzeichnet, dass** in einem Anfangsschritt dem Regelparameters ($\alpha(t)$) ein Anfangswert

($\alpha_0$) zugewiesen wird, der so beschaffen ist, dass die Verschiebung des Betriebspunktes des PV-Moduls (1) entlang der Strom-Spannungs-Kurve von einem Punkt des Betriebs im offenen Stromkreis (Pt$_{oc}$) oder von einem Kurzschluss-Betriebspunkt (Pt$_{cc}$) des Photovoltaikmoduls (1) aus beginnt.

4. Verfahren nach einem der Ansprüche 2 und 3, **dadurch gekennzeichnet, dass** während der Verschiebung des Betriebspunktes entlang der Strom-Spannungs-Kurve die Ableitung (*dV1/dt*) der physikalischen Größe mit dem Referenzschwellenwert (REF) verglichen wird und ein Rechtecksignal (S1) mit zwei Zuständen erzeugt wird, das vom Ergebnis des Vergleichs abhängt.

5. Verfahren nach Anspruch 4, **dadurch gekennzeichnet, dass** das Integral (S2) des Rechtecksignals berechnet wird (E4, E7) und eine Änderung des Regelparameters ($\alpha$) anhand des Integrals des Signals gesteuert wird.

6. Verfahren nach einem der vorhergehenden Ansprüche, **dadurch gekennzeichnet, dass** die elektrische Größe die Spannung (V1) an den Klemmen des Photovoltaikmoduls (1) oder der Strom (I1), der von dem Photovoltaikmodul (1) geliefert wird, ist.

7. Verfahren nach einem der vorhergehenden Ansprüche, **dadurch gekennzeichnet, dass** es einen vorausgehenden Schritt der Kalibrierung umfasst, in welchem der Referenzschwellenwert für das Photovoltaikmodul (1) bestimmt wird.

8. Vorrichtung zur Verfolgung eines Punktes maximaler Leistung eines Photovoltaikmoduls (1), wobei die Vorrichtung ein Modul (40) zur Ableitung einer von dem Photovoltaikmodul gelieferten elektrischen Größe nach der Zeit umfasst,
wobei die Vorrichtung **dadurch gekennzeichnet ist, dass** sie außerdem ein Modul (41) zur Regelung eines Regelparameters ($\alpha$) für den Betriebspunkt des Photovoltaikmoduls umfasst, wobei das Regelungsmodul (41) dafür ausgelegt ist, eine Ableitung der elektrischen Größe auf einen vordefinierten Referenzschwellenwert (REF) zu regeln, der einem Betriebspunkt entspricht, der gleich oder nahe dem Punkt maximaler Leistung ist.

9. Vorrichtung nach dem vorhergehenden Anspruch, **dadurch gekennzeichnet, dass** das Regelungsmodul (41) dafür ausgelegt ist, Änderungen des Regelparameters zu steuern, die eine Verschiebung des Betriebspunktes des Photovoltaikmoduls (1) mit konstanter Geschwindigkeit entlang einer charakteristischen Strom-Spannungs-Kurve des Photovoltaikmoduls hervorrufen.

10. Vorrichtung nach dem vorhergehenden Anspruch, **dadurch gekennzeichnet, dass** sie ein Steuerungsmodul (42) umfasst, das dafür ausgelegt ist, dem Regelparameter $\alpha(t)$ einen Anfangswert ($\alpha_0$) zuzuweisen, der so beschaffen ist, dass die Verschiebung des Betriebspunktes des PV-Moduls (1) entlang der Strom-Spannungs-Kurve von einem Punkt des Betriebs im offenen Stromkreis (Pt$_{oc}$) oder von einem Kurzschluss-Betriebspunkt (Pt$_{cc}$) des Photovoltaikmoduls aus beginnt.

11. Vorrichtung nach einem der Ansprüche 8 bis 10, **dadurch gekennzeichnet, dass** das Regelungsmodul (41) einen Komparator (410) umfasst, der am Eingang mit dem Ableitungsmodul (40) und mit einer analogen Schaltung (412), die eine Referenzspannung liefert, deren Wert dem Referenzschwellenwert (REF) entspricht, verbunden ist und dazu bestimmt ist, am Ausgang ein Rechtecksignal (S1) mit zwei Zuständen gemäß dem Ergebnis des Vergleichs zu liefern.

12. Vorrichtung nach dem vorhergehenden Anspruch, **dadurch gekennzeichnet, dass** das Regelungsmodul (41) einen Integrator (411) umfasst, der am Eingang mit dem Ausgang des Komparators (410) verbunden ist und dazu bestimmt ist, das Integral (S2) des Rechtecksignals (S1) vom Ausgang des Komparators (410) zu berechnen, und dadurch, dass das Steuerungsmodul (42) dafür ausgelegt ist, ausgehend von dem berechneten Integral (S2) entweder eine Vergrößerung oder eine Verkleinerung des Regelparameters zu steuern.

13. Vorrichtung nach einem der Ansprüche 8 bis 12, **dadurch gekennzeichnet, dass** das Ableitungsmodul (40) geeignet ist, mit den Anschlussklemmen des Photovoltaikmoduls verbunden zu werden und eine der Größen aus der Gruppe zu messen, welche die Spannung an den Klemmen des Photovoltaikmoduls (1) und den Strom (I1), der von dem Photovoltaikmodul (1) geliefert wird, umfasst.

14. System, welches einen Wandler (3) für ein Photovoltaikmodul und die Vorrichtung (4) zur Verfolgung eines Punktes maximaler Leistung eines Photovoltaikmoduls nach einem der Ansprüche 8 bis 13 umfasst, wobei der Wandler (3) dazu bestimmt ist, zwischen dem Photovoltaikmodul (1) und einer Last (2) angeordnet zu werden, und über ein Tastverhältnis ($\alpha$) verfügt, welches den Regelparameter der elektrischen Größe des Photovoltaikmoduls (1) darstellt.

15. System nach dem vorhergehenden Anspruch, **dadurch gekennzeichnet, dass** der Spannungswandler (3) ein Spannungserhöhungswandler ist, insbesondere ein DC-DC-Aufwärtswandler.

**Claims**

1. Method for tracking a maximum power point of a photovoltaic module (1), the method comprising a step (E1) of calculating the time derivative of an electrical quantity (V1) delivered by the photovoltaic module (1), the method being **characterized in that** it also comprises a step (E2-E8) of regulating an adjustment parameter ($\alpha$) of the operating point of the photovoltaic module, in which step the derivative ($dV1/dt$) of said electrical quantity is slaved to a predefined reference threshold (REF) that corresponds to an operating point equal or close to the maximum power point ($Pt_{mpp}$) of the photovoltaic module (1).

2. Method according to the preceding claim, **characterized in that**, in the regulating step (E2-E8), the operating point of the photovoltaic module is shifted along a characteristic current-voltage curve of said photovoltaic module, by varying the adjustment parameter ($\alpha$).

3. Method according to the preceding claim, **characterized in that**, in an initial step, an initial value ($\alpha_0$) is assigned to the adjustment parameter ($\alpha(t)$), which value is suitable for the shifting of the operating point of the PV module (1) along the current-voltage curve to start from an open-circuit operating point ($Pt_{oc}$) or from a short-circuit operating point ($Pt_{cc}$) of the photovoltaic module (1).

4. Method according to either of Claims 2 and 3, **characterized in that**, when shifting the operating point along the current-voltage curve, the derivative ($dV1/dt$) of the physical quantity is compared with the reference threshold (REF), and a rectangular pulsed signal (S1) is generated with two states dependent on the result of the comparison.

5. Method according to Claim 4, **characterized in that** the integral (S2) of the rectangular pulsed signal is calculated (E4, E7) and a variation of the adjustment parameter ($\alpha$) is controlled on the basis of the integral of the signal.

6. Method according to one of the preceding claims, **characterized in that** the electrical quantity is the voltage (V1) across the terminals of the photovoltaic module (1) or the current (I1) delivered by the photovoltaic module (1).

7. Method according to one of the preceding claims, **characterized in that** it comprises a prior step of calibration in which the reference threshold is determined for the photovoltaic module (1).

8. Device for tracking a maximum power point of a photovoltaic module (1), the device comprising a module (40) for calculating the time derivative of an electrical quantity delivered by the photovoltaic module, the device being **characterized in that** it also comprises a module (41) for regulating an adjustment parameter ($\alpha$) of the operating point of the photovoltaic module, said regulating module (41) being arranged to slave a derivative of said electrical quantity to a predefined reference threshold (REF) that corresponds to an operating point equal or close to the maximum power point.

9. Device according to the preceding claim, **characterized in that** the regulating module (41) is arranged to control variations of the adjustment parameter causing the operating point of the photovoltaic module (1) to shift at constant speed along a characteristic current-voltage curve of said photovoltaic module.

10. Device according to the preceding claim, **characterized in that** it comprises a control module (42) arranged to assign an initial value ($\alpha_0$) to the adjustment parameter ($\alpha(t)$), which value is suitable for the shifting of the operating point of the PV module (1) along the current-voltage curve to start from an open-circuit operating point ($Pt_{oc}$) or from a short-circuit operating point ($Pt_{cc}$) of the photovoltaic module.

11. Device according to one of Claims 8 to 10, **characterized in that** the regulating module (41) comprises a comparator (410) that is connected at input to the derivative module (40) and to an analogue circuit (412) delivering a reference voltage, the value of which corresponds to the value of the reference threshold (REF), and that is intended to deliver, as output, a rectangular pulsed signal (S1) with two states according to the result of the comparison.

12. Device according to the preceding claim, **characterized in that** the regulating module (41) comprises an integrator (411) that is connected at input to the output of the comparator (410) and is intended to calculate the integral (S2) of the rectangular pulsed signal (S1) output by the comparator (410), and **in that** the control module (42) is arranged to control either an increase or a decrease of the adjustment parameter on the basis of the calculated integral (S2).

13. Device according to one of Claims 8 to 12, **characterized in that** the derivative module (40) is capable of being connected to the terminals of the photovoltaic module and of measuring one of the quantities from the group including the voltage across the terminals of the photovoltaic module (1) and the current (I1) delivered by the photovoltaic module (1).

14. System comprising a converter (3) for a photovoltaic module and the device (4) for tracking a maximum power point of a photovoltaic module according to one of Claims 8 to 13, the converter (3) being intended to be interposed between the photovoltaic module (1) and a load (2) and having a duty cycle ($\alpha$) which constitutes said adjustment parameter of the electrical quantity of the photovoltaic module (1).

15. System according to the preceding claim, **characterized in that** the voltage converter (3) is a voltage step-up converter, in particular a DC-to-DC boost converter.

**Figure 1**

**Figure 2**

**Figure 3**

**Figure 4**

**Figure 5**

**Figure 6**

Figure 7A

Figure 7B

Figure 7C

Figure 7D

seuil

Conduction continue

T1　　　　　　　　　T2

**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Comparison of Photovoltaic Array Maximum Power Point Tracking Techniques. **ESRAM TRISTAN et al.** IEEE TRANSACTIONS ON ENERGY CONVERSION. IEEE SERVICE CENTER, 01 Juin 2007, vol. 22, 439-449